# EUROPEAN PATENT APPLICATION

(11) **EP 1 738 969 A2**
(43) Date of publication of application: **03.01.2007**
(21) Application number: 06012682.8
(22) Date of filing: 20.06.2006
(51) Int. Cl.: B60R 21/18

(54) **Occupant restraint belt and occupant restraint system**

(30) Priority: 28.06.2005 JP 2005188504
(71) Applicant: TAKATA CORPORATION, Minato-ku, Tokyo 106-8510 (JP)
(72) Inventor: Suyama, Yoji Takata Corporation, Minato-ku Tokyo 106-8510 (JP)
(74) Representative: Banzer, Hans-Jörg

(57) **Abstract**

In order to provide an occupant restraint belt (1) that is routed above the upper surface of the shoulder of an occupant to the front of the occupant, in which the part from above the upper surface of the occupant's shoulder to the front of the occupant is inflatable, and which can be brought into contact with the upper surface of the occupant's shoulder without an excess increase in the volume of the inflatable portion, and an occupant restraint system including the same, a shoulder belt section (10) of the occupant restraint belt (1) has an over-shoulder portion (10S) located above the upper surface of the shoulder of an occupant; and a front portion (10F) located across the front of the occupant. The shoulder belt section (10) has a structure in which the part from the front portion (10F) to the over-shoulder portion (10S) inflates into a shape curved along the upper surface of the occupant's shoulder.

## Description

The present invention relates to an inflatable occupant restraint belt for restraining an occupant sitting in a vehicle seat and an occupant restraint system equipped with the occupant restraint belt.

### Background Art

Known occupant restraint systems for restraining an occupant sitting in a vehicle seat with an inflatable belt include an occupant restraint system having an occupant restraint belt that is routed above the shoulder of the occupant to the front of the occupant, in which the part above the occupant's shoulder to the front of the occupant is inflatable (e.g., Japanese Unexamined Patent Application Publication No. 2003-312439).

In the occupant restraint system (airbelt system) disclosed in Japanese Unexamined Patent Application Publication No. 2003-312439, the shoulder anchor is fixed to the upper part of a pillar located obliquely behind the vehicle seat, and the occupant restraint belt passing through the shoulder anchor is routed across the front of an occupant sitting in the seat.

The occupant restraint belt includes a shoulder belt section that is routed from the shoulder anchor, above one of the shoulders of the occupant, laterally across the front of the upper part of the occupant, and to the part around the waist opposite to the shoulder anchor; and a lap belt section connecting to the lower end of the shoulder belt section and routed across around the abdominal part of the occupant as to cover it. The shoulder belt section of this reference is an inflatable bag-like belt. The bag-like belt is disposed such that the upper end is located above the occupant's shoulder. The lap belt section of this reference is also an inflatable bag-like belt.

In the event of a vehicle collision or rollover or the like, the shoulder belt section and the lap belt section inflates to restrain the occupant. The upper end of the shoulder belt section inflates above the occupant's shoulder, that is, between the occupant's head and the side of the vehicle cabin. This prevents the occupant's head from striking against the side of the vehicle cabin and the like.

### Problems to be Solved by the Invention

When the shoulder anchor is disposed higher than the upper end of the seatback, as shown in Fig. 2 of Japanese Unexamined Patent Application Publication No. 2003-312439, the occupant restraint belt (shoulder belt section) that is routed from the shoulder anchor across the front of the occupant extends upward apart from the upper surface of the occupant's shoulder, forming a relatively wide space between the upper surface of the occupant's shoulder and the occupant restraint belt.

In order to fill in the space between the occupant restraint belt and the upper surface of the occupant's shoulder at the inflation of the occupant restraint belt, it is necessary to inflate the occupant restraint belt downward more. This structure results in a significant increase in the volume of the inflatable portion of the occupant restraint belt.

Accordingly, it is an object of the present invention to provide an occupant restraint belt that is routed above the upper surface of the occupant's shoulder to the front of the occupant, in which the part above the upper surface of the occupant's shoulder to the front of the occupant is inflatable, and which can be brought into contact with the upper surface of the occupant's shoulder without an excess increase in the volume of the inflatable portion, and an occupant restraint system including the same.

### Means for Solving the Problems

According to the invention, this object is achieved by an occupant restraint belt as defined in claim 1, an occupant restraint system as defined in claim 4 and a procedure for forming a belt-like bag as defined in claim 6. The dependent claims define preferred and advantageous embodiments of the invention.

According to the invention, there is provided an occupant restraint belt routed above the shoulder of an occupant to the front of the occupant, and having an inflatable portion from above the shoulder of the occupant to the front of the occupant. The inflatable portion includes an over-shoulder portion that is located above the shoulder of the occupant, and a front portion located at the front of a region lower than the occupant's shoulder, in an inflated state; and the inflatable portion is constructed such that the part from the front portion to the over-shoulder portion inflates into a shape curved along the upper surface of the shoulder.

According to an embodiment of the invention, the inflatable portion is constructed such that at least the part from the front of the occupant's shoulder to the over-shoulder portion facing the occupant is shorter than the part opposite thereto, so that the part of the inflatable portion from the front portion to the over-shoulder portion inflates into a shape curved along the upper surface of the shoulder.

According to the invention, there is provided additionally an occupant restraint system including an occupant restraint belt including an inflatable portion and an inflator for inflating the inflatable portion, wherein the occupant restraint belt is the occupant restraint belt described above.

### Advantages of the Invention

With the occupant restraint belt and the occupant restraint system according to the invention, the inflatable portion of the occupant restraint belt is constructed such that the part from the front portion to the over-shoulder portion inflates into a shape curved along the upper surface of the occupant's shoulder. Accordingly, the inflated inflatable portion can be brought into contact with the upper surface of the occupant's shoulder without an excess increase in the volume of the inflatable portion.

According to the embodiment described above, upon inflation of the inflatable portion, the over-shoulder portion is drawn to the side facing the occupant to come into close contact with the upper surface of the occupant's shoulder.

### Brief Description of the Drawings

Fig. 1 is a perspective view of an occupant restraint system including an inflatable occupant restraint belt according to an embodiment.
Fig. 2 is a side view of an inflatable portion of the occupant restraint belt of Fig. 1.
Fig. 3 is a diagram showing the structure of the inflatable portion.
Fig. 4 is an explanatory diagram showing the procedure for folding the inflatable portion.
Fig. 5 an explanatory diagram showing the procedure for folding the inflatable portion.
Fig. 6 is an explanatory diagram showing the procedure for folding the inflatable portion.
Fig. 7 an explanatory diagram showing the procedure for folding the inflatable portion.
Fig. 8 is an explanatory diagram showing the procedure for folding the inflatable portion.
Fig. 9 an explanatory diagram showing the procedure for folding the inflatable portion.

### Best Mode for Carrying Out the Invention

An embodiment of the present invention will be described with reference to the drawings.

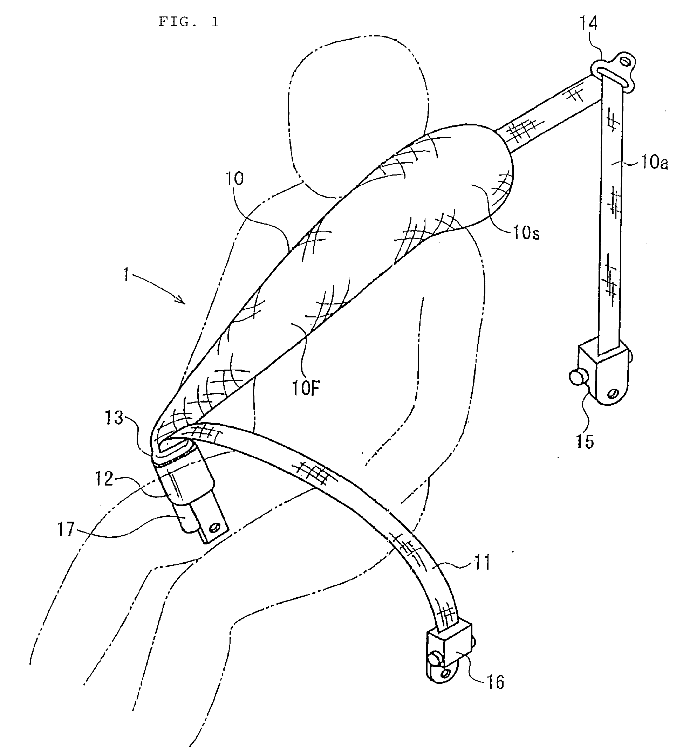

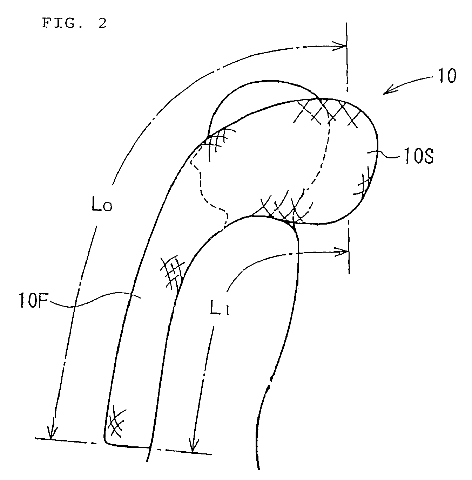

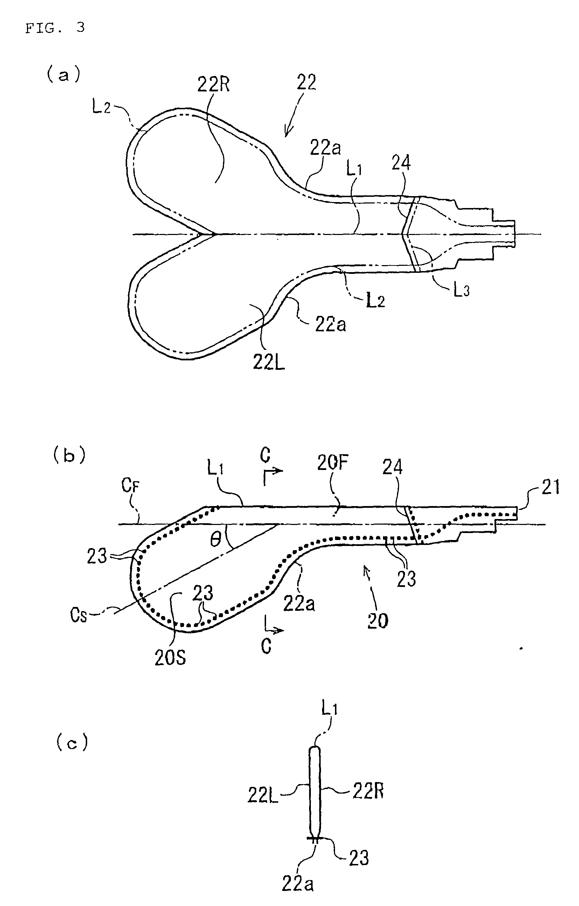

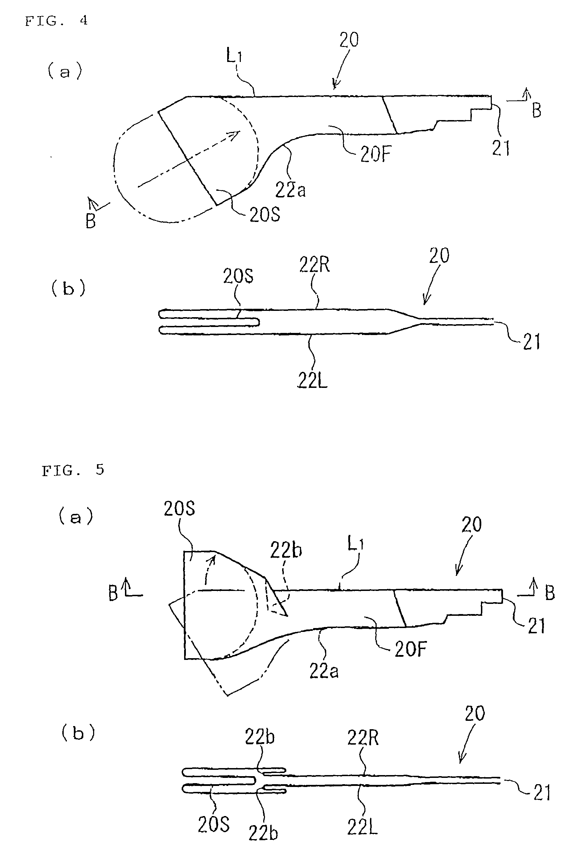

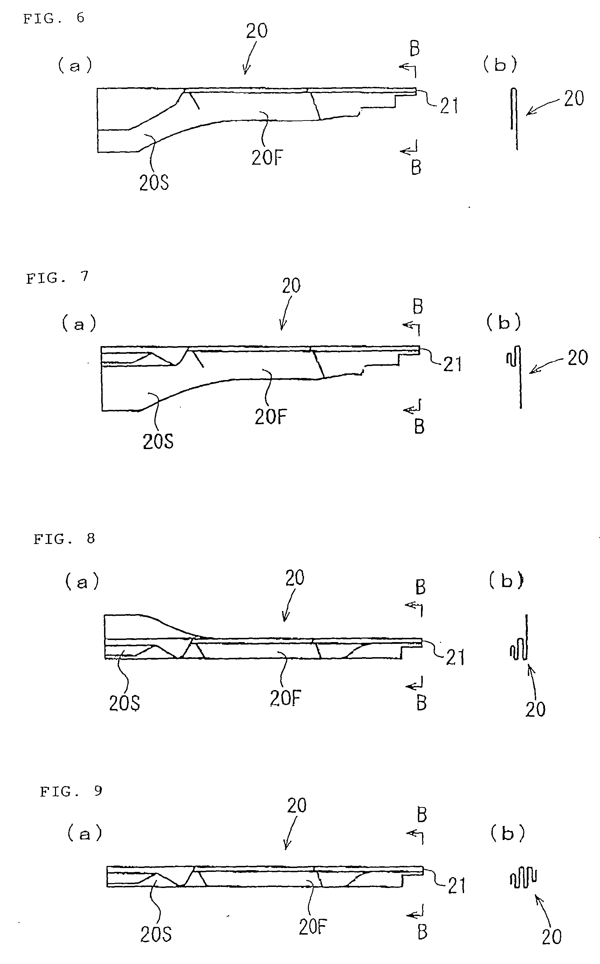

Fig. 1 is a perspective view of an occupant restraint system including an inflatable occupant restraint belt according to an embodiment. Fig. 2 is a side view of an inflatable portion of the occupant restraint belt. Figs. 1 and 2 show the inflatable portion in an inflated state. Fig. 3(a) is a development diagram of a panel (base cloth) that constructs the inflatable portion; Fig. 3(b) is a side view of the inflatable portion after being sewn; and Fig. 3(c) is a cross-sectional view taken along line C-C of Fig. 3(b); Figs. 4 to 9 are explanatory diagrams of the procedure for folding the inflatable portion (bag), wherein Figs. 4(a) to 9(a) are plan views of the inflatable portion; Figs. 4(b) and 5(b) are cross-sectional view taken along line B-B of Figs. 4(a) and 5(a), respectively; and Figs. 6 (b) to 9(b) are views on arrow B-B of Figs. 6(a) to 9(a), respectively.

The occupant restraint system of the embodiment includes a shoulder belt section 10 that passes above the shoulder of an occupant sitting in a vehicle seat and is routed obliquely (from the upper left to the lower right in this embodiment) across the front of the upper part of the occupant; a webbing 10a connecting to the shoulder belt section 10; a lap belt section 11 routed laterally across the upper part around the waist of the occupant; a buckle device 12 adjacent to the side (on the right in this embodiment) of the seat; a tongue 13 that is inserted and latched in the buckle device 12 when the occupant fastens the belt; and a shoulder anchor 14 that guides the webbing 10a and so on.

In this embodiment, the shoulder belt section 10, the webbing 10a, and the lap belt section 11 construct an occupant restraint belt 1.

As shown in Fig. 2, the shoulder belt section 10 has an over-shoulder portion 10S disposed above the occupant's shoulder and a front portion 10F disposed from the front of the shoulder across the front of the waist. The over-shoulder portion 10S and the front portion 10F are connected to each other. As shown in the drawing, the shoulder belt section 10 can inflate into a shape curved from the front portion 10F, along the upper surface of the occupant's shoulder, to the over-shoulder portion 10S.

According to the embodiment, as shown in Fig. 2, the length L_{I} of the portion from the front portion 10F to the over-shoulder portion 10S, which faces the occupant, is shorter than the length L_{O} opposite thereto, so that when the shoulder belt section 10 inflates, the over-shoulder portion 10S is drawn to the occupant, into a shaped curved along the upper surface of the occupant's shoulder.

In this embodiment, the shoulder belt section 10 has a structure in which a thick belt-like bag 20 is folded into a thin belt shape and is covered with a cover, which is usually kept in belt shape.

The bag 20 has an over-shoulder-portion chamber 20S that constructs the over-shoulder portion 10S, and a front-portion chamber 20F that constructs the front portion 10F when formed into the shoulder belt section 10. The chambers 20F and 20S range substantially in an elbowed shape. In this embodiment, it is preferable that the inclination θ of the axial center Cs along the extension direction of the over-shoulder-portion chamber 20S relative to the axial center CF of the extension direction of the front-portion chamber 20F (see Fig. 3(b)) be within 10 to 45°. In this embodiment, a gas inlet 21 is disposed at the end of the front-portion chamber 20F away from the over-shoulder-portion chamber 20S.

The bag 20 of this embodiment is constructed of a panel 22 having two elbowed panels 22L and 22R that construct the left half and right half of the shoulder belt section 10 in an inflated state, respectively. The panels 22L and 22R range along the rims of the sides of the front portion 10F (the front-portion chamber 20F) opposite to the occupant. The panel 22 is folded in two along the boundary (fold line) L_{I} between the panels 22L and 22R, and the doubled rims are joined together by sewing means such as a sewing thread 23 or the like to form the bag 20.

Alternate long and short dashes line L₂ in Fig. 3(a) indicates the stitch line by the sewing thread 23. Reference numeral 24 denotes a reinforcing fabric around the gas inlet 21 of the panel 22. Alternate long and short dashes line L₃ indicates a line of stitching the panel 22 to the panel 22.

In this embodiment, the length L_{O} of the shoulder belt section 10 opposite to the occupant indicates the length of the rim along the fold line L₁ (hereinafter, sometimes referred to as rim L₁) from the front-portion chamber 20F to the over-shoulder-portion chamber 20S of the bag 20; the length L_{I} adjacent to the occupant indicates the length of a rim 22a (stitched rim) opposed to the fold line L₁ between the panels 22L and 22R from the front-portion chamber 20F to the over-shoulder-portion chamber 20S. The rim 22a is shorter than the rim L₁.

The procedure for folding the bag 20 will then be described.

As shown in Fig. 3(b), the bag 20 is spread out flatly in such a manner that the panels 22L and 22R are put one on another. Then, as shown in Fig. 4, the end of the over-shoulder-portion chamber 20S is folded between the panels 22L and 22R to decrease the over-shoulder-portion chamber 20S in length.

Then, as shown in Fig. 5, the over-shoulder-portion chamber 20S is turned to the rim L₁ around the base of the over-shoulder-portion chamber 20S so that the bag 20 extends in a straight line from the front-portion chamber 20F to the over-shoulder-portion chamber 20S. At that time, slack 22b formed at the base of the over-shoulder-portion chamber 20S is folded between the panels 22L and 22R.

Subsequently, an intermediately folded body of the bag 20 is further folded compact in width, as shown in Figs. 6 to 9, into a thin-beltlike folded body. The shape of the folded body is retained with a band (not shown) or the like.

The thin-beltlike folded body of the bag 20 is covered to form the shoulder belt section 10.

The end of the shoulder belt section 10 adjacent to the over-shoulder portion 10S is connected to the webbing 10a by stitching; the other end (adjacent to the gas inlet 21) is connected to the tongue 13.

The webbing 10a is made of a normal belt similar to general uninflatable seatbelts, and slidably passes through the shoulder anchor 14. The end of the webbing 10a retractably connects to an emergency-lock seatbelt retractor (ELR) 15 mounted to the vehicle.

In this embodiment, the buckle device 12 connects to an inflator 17 that is activated to emit high-pressure gas in an emergency such as a car collision. The tongue 13 has a passage (not shown) for introducing the gas from the inflator 17 into the shoulder belt section 10. The gas inlet 21 of the bag 20 communicates with the passage.

In this embodiment, the lap belt section 11 is also made of a normal belt similar to general uninflatable seatbelt. The end of the lap belt section 11 connects to the webbing 10a; the other end retractably connects to a seatbelt retractor (ELR) 16 disposed at the end of the seat opposite to the buckle device 12.

The occupant restraint belt 1 can be used like general seatbelts. When the inflator 17 is activated at a car collision or rollover or the like, gas is introduced into the shoulder belt section 10 (bag 20) through the passage and the gas inlet 21 to inflate the shoulder belt section 10 in such a manner that it increases in thickness (diameter), as shown in Fig. 2.

The occupant restraint belt 1 is constructed in such a manner that the shoulder belt section 10 inflates in a shape curved across the front portion 10F to the over-shoulder portion 10S along the upper surface of the occupant's shoulder. With such a structure, the inflated shoulder belt section 10 can be brought into contact with the upper surface of the occupant's shoulder without an excess increase in the volume of the shoulder belt section 10.

It is to be understood that the above-described embodiment is an example of the invention, and the invention is not limited to the drawings.

Although the occupant restraint belt of the embodiment has a structure in which only the shoulder belt section 10 inflates, also the lap belt section 11 may be inflatable. The system of supplying gas to the inflatable portion, the system of retracting the belt when it is not used, and the structure to pass the belt into the tongue and the through anchor may be other than those in the drawings.

While the inflatable portion (shoulder belt section 10) of the embodiment has a structure in which the over-shoulder portion 10S becomes thicker than the front portion 10F, and the front portion 10F becomes even in thickness across all the length, the thickness of the inflatable portion is not limited to that.

## Claims

1. An occupant restraint belt routed above the shoulder of an occupant to the front of the occupant, and having an inflatable portion (10) from above the shoulder of the occupant to the front of the occupant, wherein
the inflatable portion (10) includes an over-shoulder portion (10S) that is located above the shoulder of the occupant, and a front portion (10F) located at the front of a region lower than the occupant's shoulder, in an inflated state; and
the inflatable portion (10) is constructed such that the part from the front portion (10F) to the over-shoulder portion (10S) inflates into a shape curved along the upper surface of the shoulder.

2. The occupant restraint belt according to Claim 1,
wherein the inflatable portion (10) is constructed such that at least the part from the front of the occupant's shoulder to the over-shoulder portion (10S) facing the occupant is shorter than the part opposite thereto, so that the part of the inflatable portion from the front portion (10F) to the over-shoulder portion (10S) inflates into a shape curved along the upper surface of the shoulder.

3. The occupant restraint belt according to Claim 1 or 2,
wherein the inflatable portion (10) has a belt-like bag (20) having an over-shoulder-portion chamber (20S) corresponding to the over-shoulder portion (10S) and a front-portion chamber (20F) corresponding to the front portion (10F).

4. The occupant restraint belt according to Claim 3,
wherein an inclination (Θ) of an axial center line (C_{S}) of the over-shoulder-portion chamber (20S) relative to the axial center line (C_{F}) of the front-portion-chamber (20F) is within 10° to 45°.

5. An occupant restraint system comprising an occupant restraint belt including an inflatable portion (10) and an inflator (17) for inflating the inflatable portion (10),
wherein the occupant restraint belt (1) is the occupant restraint belt according to any one Claims 1 - 4.

6. A procedure for forming a belt-like bag (20) having an over-shoulder-portion chamber (20S) and a front-portion chamber (20F) comprising the steps:
joining two panels (22L, 22R) of the bag (20) together, spreading out the bag (20) flatly in such a manner that the panels (22L, 22R) are put one on another,
folding the end of the over-should-portion chamber (20S) between the panels (22L, 22R),
turning the over-shoulder-portion chamber (20S) to a rim (L₁) around a base of the over-shoulder-portion chamber (20S) so that the bag extends in a straight line from the front-portion chamber (20F) to the over-shoulder-portion chamber (20S), and
folding at the same time a slack (22b) formed at the base of the over-shoulder-portion chamber (20S) between the panels (22L, 22R).

7. The procedure for forming a belt-like bag (20) according to Claim 6,
wherein the bag (20) is further folded compact in width into a thin-beltlike folded body,
wherein the folded body is retained with a band, and
wherein the folded body is covered.

8. The occupant restraint belt according to Claim 3 or 4,
wherein the belt-like bag (20) is formed according to Claim 6 or 7.
